# EUROPÄISCHE PATENTANMELDUNG

(11) **EP 3 995 287 A1**
(43) Veröffentlichungstag der Anmeldung: **11.05.2022**
(21) Anmeldenummer: 21206624.5
(22) Anmeldetag: 05.11.2021
(51) Int. Cl.: B29C 53/10, B29C 53/20, B29C 53/82, B29C 48/10

(54) **VERFAHREN UND VORRICHTUNG ZUM ANBRINGEN VON APPLIKATIONEN AN EINEN SCHLAUCH**

(30) Priorität: 06.11.2020 DE 102020129260
(71) Anmelder: Plur, Andreas, 63571 Gelnhausen (DE)
(72) Erfinder: Plur, Andreas, 63571 Gelnhausen (DE)
(74) Vertreter: Stoffregen, Hans-Herbert

(57) **Zusammenfassung**

Die Erfindung bezieht sich auf ein Verfahren zum Anbringen einer Applikation an, in oder auf einer Lage (24) eines Schlauchs (12) insbesondere Folienschlauchs, wobei der Schlauch (12) auf eine Applikationshilfe (10, 26) geschoben oder die Applikationshilfe (10, 26) in den Schlauch (12) geschoben wird und wobei die Applikationshilfe (10, 26) eine Arbeitsfläche (22, 44) zum Anbringen der Applikation bildet. Damit die Anwendung der Applikationshilfe vereinfacht und eine Beschädigung des Schlauchs minimiert wird, ist vorgesehen, dass als Applikationshilfe (10, 26) eine solche verwendet wird, die in einen ersten, zusammengelegten Zustand mit einer Querschnittsfläche bringbar ist, die kleiner als eine Querschnittsfläche des Schlauchs 12 ist, wobei die Applikationshilfe (10, 26) in dem ersten, zusammengelegen Zustand in den Schlauch (12) eingeführt bzw. der Schlauch über die Applikationshilfe (10, 26) gestülpt wird und dass die Applikationshilfe (10, 26) im Inneren des Schlauchs (12) in einen zweiten, die Arbeitsfläche (22; 40) bildenden Zustand bringbar ist, wobei der Querschnitt der Arbeitsfläche (22, 44) im Wesentlichen dem Querschnitt des aufgespannten Schlauchs (12) entspricht.

## Beschreibung

Die Erfindung betrifft ein Verfahren zum Anbringen von Applikationen an einen Schlauch, insbesondere an einen Folienschlauch als Schutzschlauch für einen Roboterarm nach dem Oberbegriff des Anspruchs 1 sowie auf eine Vorrichtung zur Durchführung des Verfahrens nach dem Oberbegriff des Anspruchs 4.

Aus dem Stand der Technik sind Verfahren bekannt, bei denen eine Applikationshilfe in Form eines brettförmigen oder rohrförmigen Elements in den Schlauch eingeführt bzw. der Schlauch über diese Applikationshilfe übergezogen wird. Dabei weist das Element im Wesentlichen im Querschnitt einen Außenumfang auf, der einem Umfang des Schlauchs entspricht. Im eingeschobenen Zustand bildet eine Oberfläche des brettförmigen oder rohrförmigen Elements eine Arbeitsfläche, auf der einer Lage des Schlauchs zum Anbringen der Applikation aufliegt.

Bei den bekannten Applikationshilfen weist das die Arbeitsfläche bildende Element einen Umfang auf, der im Wesentlichen dem Umfang des zu bearbeitenden Schlauchs entspricht. Somit kann die Lage des Schlauchs bei eingesteckter Applikationshilfe möglichst faltenfrei bearbeitet werden. Allerdings besteht die Gefahr, dass der Schlauch beim Einschieben der Applikationshilfe in den Schlauch bzw. beim Überziehen des Schlauchs über die Applikationshilfe beschädigt wird, da dieser z. B. in Umfangsrichtung zu sehr gespannt wird.

Davon ausgehend liegt der vorliegenden Erfindung die Aufgabe zugrunde, ein Verfahren und eine Vorrichtung der eingangs genannten Art derart weiterzubilden, dass die Anwendung der Applikationshilfe vereinfacht und eine Beschädigung des Schlauchs minimiert wird.

Die Aufgabe wird erfindungsgemäß u. a. durch ein Verfahren mit den Merkmalen des Anspruchs 1 gelöst.

Gemäß der Erfindung ist vorgesehen, dass als Applikationshilfe eine solche verwendet wird, die in einen ersten, zusammengelegten Zustand mit einer Querschnittsfläche bringbar ist, die kleiner als eine Querschnittsfläche des Schlauchs ist, wobei die Applikationshilfe in dem ersten, zusammengelegen Zustand in den Schlauch eingeführt bzw. der Schlauch über die Applikationshilfe gestülpt wird und dass die Applikationshilfe im Inneren des Schlauchs in einen zweiten, die Arbeitsfläche bildenden Zustand bringbar ist, wobei der Querschnitt im Wesentlichen einem Querschnitt des aufgespannten Schlauchs entspricht.

Gemäß einer bevorzugten Verfahrensweise ist vorgesehen, dass die Applikationshilfe zumindest zwei gelenkig miteinander verbundene Elemente aufweist, wobei die Elemente vor dem Einführen in den Schlauch oder vor dem Überstülpen des Schlauchs aufgerollt werden und wobei die Elemente in dem Schlauch zu der Arbeitsfläche ausgerollt werden.

Alternativ besteht die Möglichkeit, dass die Applikationshilfe zumindest zwei einzelne brettförmige Elemente aufweist, wobei die Elemente vor dem Einführen in den Schlauch oder vor dem Überstülpen des Schlauchs in Längsrichtung übereinander oder ineinander gelegt werden, und wobei die zumindest zwei Elemente in dem Schlauch aufgeklappt, aufgeschoben oder seitlich miteinander formschlüssig zur Bildung der Arbeitsfläche verbunden werden.

Durch die Bereitstellung der Applikationshilfe in Form von einzelnen Elementen wird der Vorteil erreicht, dass diese auf einfache Weise in den Schlauch eingesteckt bzw. der Schlauch auf einfache Weise über die einzelnen Elemente gestülpt werden kann. Anschließend kann die Applikationshilfe im Inneren des Schlauchs aus den einzelnen Elementen zusammengesetzt wie z. B. zusammengesteckt, ausgerollt oder teleskopisch ausgezogen werden.

Die Aufgabe wird erfindungsgemäß durch eine Vorrichtung mit den Merkmalen des Anspruchs 4 gelöst.

Die Vorrichtung zeichnet sich dadurch aus, dass die Applikationshilfe in einen ersten, zusammengelegten Zustand mit einer Querschnittsfläche bringbar ist, die kleiner als eine Querschnittsfläche des Schlauchs ist, wobei die Applikationshilfe in dem ersten, zusammengelegen Zustand in den Schlauch einführbar bzw. der Schlauch über die Applikationshilfe stülpbar ist und dass die Applikationshilfe im Inneren des Schlauchs in einen zweiten, die Arbeitsfläche bildenden Zustand bringbar ist, in dem die Applikationshilfe einen Querschnitt aufweist, der im Wesentlichem dem Querschnitt des aufgespannten Schlauchs entspricht.

Besonders bevorzugt umfasst die Applikationshilfe zumindest zwei flächige Elemente umfasst, die in dem Schlauch zur Bildung der Arbeitsfläche zusammensetzbar, faltbar oder ausziehbar sind.

Vorzugsweise sind die zumindest zwei Elemente entlang ihrer Längsachsen gelenkig miteinander verbunden.

Alternativ können die zumindest zwei Elemente als einzelne brettförmige Elemente ausgebildet sein, wobei diese entlang Längsseite jeweils Vorsprünge bzw. Aussparungen aufweisen, mittels denen die einzelnen Elemente formschlüssig zu der Arbeitsfläche verbindbar sind.

Um zu vermeiden, dass die Lagen des Schlauchs beschädigt werden, ist vorgesehen, dass die zumindest zwei Elemente in ausgerolltem oder zusammengesetztem Zustand einen Umfang aufweisen, der im Wesentlichen einem Innenumfang des Schlauchs entspricht bzw. kleiner als dieser ist.

Die zumindest zwei Elemente können brettförmig ausgebildet sein. Auch besteht die Möglichkeit, dass die zumindest zwei flächigen Elemente in Querrichtung teleskopartig ausziehbar ausgebildet sind.

Die Applikationshilfe weist ein oder mehrere Elemente auf, die jeweils für sich oder zusammengesetzt eine Arbeitsfläche bilden. Auf der Arbeitsfläche können Handlungen aus der Gruppe Drucken, Scannen, Detektieren, Beschneiden, Ausschneiden, Zuschneiden, Stanzen, Lochen, Perforieren und/oder Bekleben zumindest einer Folienschlauchbahn ausgeführt werden.

Beispielsweise kann die Applikationshilfe als Unterlage zum Aufbringen eines Drucks oder zum Beschneiden, Ausschneiden, Zuschneiden, Stanzen, Lochen, Perforieren und/oder Bekleben der zumindest einen Folienschlauchbahn ausgebildet sein.

Auch wird eine mechanische, physikalische und/oder chemische Behandlung einer Innen- oder Außenseite der Schlauchbahn ermöglicht. Die Applikationshandlungen können auch automatisiert ausgeführt werden.

Weitere Einzelheiten, Vorteile und Merkmale der Erfindung ergeben sich nicht nur aus den Ansprüchen, den diesen zu entnehmenden Merkmalen - für sich und/oder im Kombination -, sondern auch aus der nachfolgenden Beschreibung von den Zeichnungen zu entnehmenden bevorzugten Ausführungsbeispielen sowie deren Erläuterungen.

Es zeigen:
- Fig. 1: eine perspektivische Ansicht einer ersten Ausführungsform einer Applikationshilfe in einem Schlauch,
- Fig. 2: eine perspektivische Ansicht der Applikationshilfe in dem Schlauch im ausgerollten Zustand,
- Fig. 3: eine perspektivische Ansicht einer zweiten Ausführungsform einer Applikationshilfe im zusammengelegten Zustand in einem Schlauch und
- Fig. 4: die Applikationshilfe gem. Fig. 3 im zusammengesetzten Zustand in einem Schlauch.

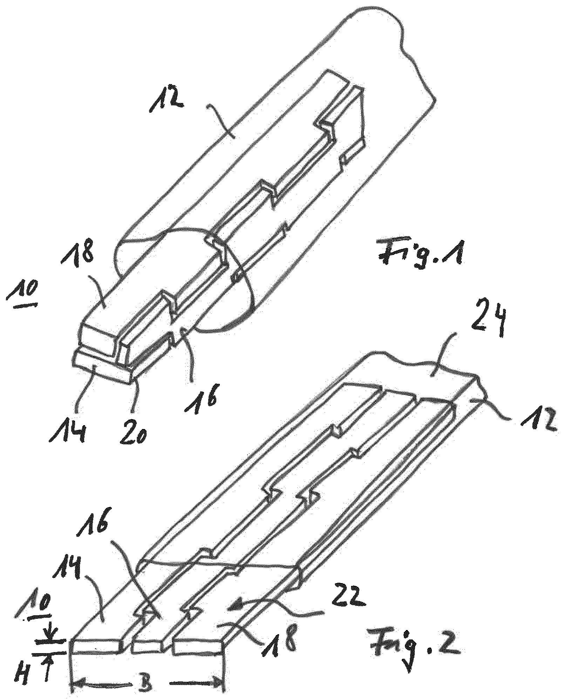

Fig 1. zeigt eine erste Ausführungsform einer Applikationshilfe 10 die im zusammengelegten Zustand in einen Schlauch 12, insbesondere einen Folienschlauch, eingeführt ist.

Die Applikationshilfe 10 besteht aus einer Vielzahl einzelner Elemente 14, 16, 18, die entlang ihrer Längsränder 20 gelenkig miteinander verbunden sind. Die einzelnen Elemente 14, 16, 18 können zu einer Rolle aufgerollt werden. Die Rolle weist einen Umfang auf, der kleiner ist als ein Innenumfang des Schlauchs 12, so dass die Applikationshilfe 10 im aufgerollten Zustand einfach und schonend in den Schlauch 12 eingeschoben bzw. der Schlauch 12 über die Applikationshilfe gestülpt werden kann.

Fig. 2 zeigt die in den Schlauch 12 eingeführte Applikationshilfe 10 in einem ausgerollten Zustand, wobei die einzelnen Elemente 14, 16, 18, 20 in einer Ebene ausgerollt sind und eine Arbeitsfläche 22 ausbilden, auf der eine Lage 24 des Schlauchs 12 derart aufliegt, dass eine Applikation in, auf oder an die Lage 24 des Schlauchs 12 appliziert werden kann.

Die Applikationshilfe 10 weist im ausgerollten Zustand eine Breite B sowie eine Höhe H auf, die einen Umfang aufspannen, der im Wesentlichen einem Innenumfang des Schlauchs 12 entspricht, so dass die Lage 24 des Schlauchs 12 faltenfrei auf der durch die Applikationshilfe 10 gebildeten Arbeitsfläche 22 aufliegt. Mit anderen Worten entspricht der Umfang der ausgerollten Applikationshilfe, d. h. 2xB + 2xH im Wesentlichen dem Innenumfang des Schlauchs 12.

Durch die Bereitstellung der Applikationshilfe 10 im zusammengerollten Zustand wird der Vorteil erreicht, dass diese auf einfache Weise in den Schlauch 12 eingesteckt bzw. der Schlauch 12 auf einfache Weise über die Applikationshilfe 10 gestülpt werden kann. Anschließend kann die Applikationshilfe 10 im Inneren des Schlauchs 12 ausgerollt werden, wodurch die Arbeitsfläche 22 materialschonend und ohne die Lage 24 des Schlauchs 12 zu strapazieren ausgebildet werden kann.

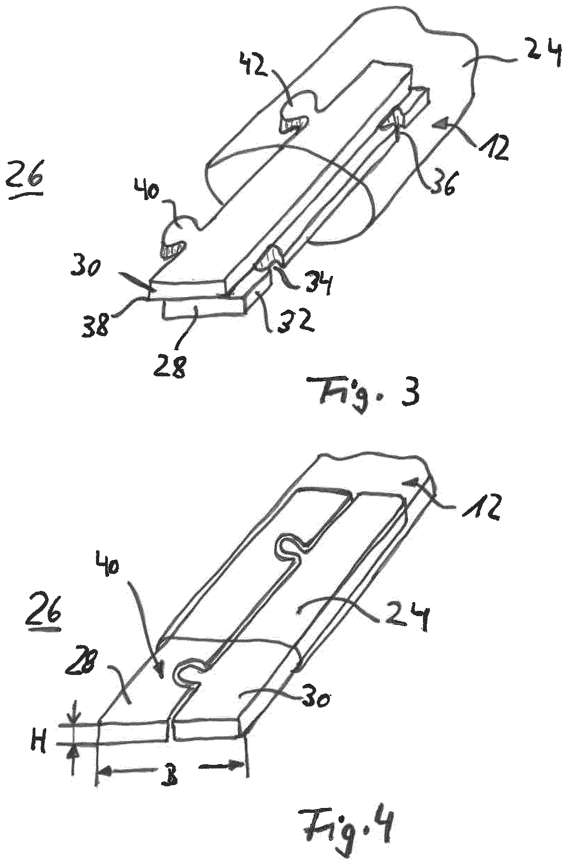

Fig. 3 zeigt in perspektivischer Darstellung eine zweite Ausführungsform einer Applikationshilfe 26, die aus einer Vielzahl von einzelnen, separaten Elementen 28, 30 besteht. Im vorliegenden Fall umfasst die Applikationshilfe 26 zwei einzelne brettförmige Elemente 28, 30. Diese werden, wie in Fig. 3 dargestellt, in Längsrichtung übereinandergelegt und in den Schlauch 12 eingesteckt bzw. der Schlauch 12 wird über die übereinandergelegten Elemente 28, 30 gestülpt. Da die zusammengelegten Elemente 28, 30 in der in Fig.3 dargestellten Ausführung in ihrer Umfangsdimension erheblich kleiner als der Umfang des Schlauchs 12 sind, kann die Applikationshilfe 26 in den Schlauch 12 eingesteckt werden, ohne dass die Lage 24 des Schlauchs 12 durch Querkräfte überbeansprucht wird.

Fig. 4 zeigt die Applikationshilfe 26 im zusammengesetzten Zustand, wobei die einzelnen Elemente 28, 30 entlang eines Längsrandes 32 formschlüssig verbunden sind. Hierzu ist vorgesehen, dass in dem Element 28 Aussparungen 34, 36 vorgesehen sind, in welche entlang eines Längsrandes 38 angeordnete Vorsprünge 40, 42 des Elementes 30 eingreifen und somit die formschlüssige Verbindung zwischen den einzelnen Elemente 28, 30 sicherstellt.

Die zusammengesteckten Elemente 28, 30 bilden eine Arbeitshöhe 44, die eine Breite B und eine Höhe H aufweist, die in Summe einen Umfang bilden, der im Wesentlichen dem Umfang des Schlauchs entspricht.

Die Umfangserstreckung der einzelnen Elemente 28, 30 in übereinander angeordneter Lage ist jedoch kleiner als ein Innenumfang des Schlauchs 12.

## Patentansprüche

1. Verfahren zum Anbringen einer Applikation an, in oder auf einer Lage (24) eines Schlauchs (12) insbesondere Folienschlauchs, wobei der Schlauch (12) auf eine Applikationshilfe (10, 26) geschoben oder die Applikationshilfe (10, 26) in den Schlauch (12) geschoben wird und wobei die Applikationshilfe (10, 26) eine Arbeitsfläche (22, 44) zum Anbringen der Applikation bildet,
**dadurch gekennzeichnet,**
**dass** als Applikationshilfe (10, 26) eine solche verwendet wird, die in einen ersten, zusammengelegten Zustand mit einer Querschnittsfläche bringbar ist, die kleiner als eine Querschnittsfläche des Schlauchs 12 ist, wobei die Applikationshilfe (10, 26) in dem ersten, zusammengelegen Zustand in den Schlauch (12) eingeführt bzw. der Schlauch über die Applikationshilfe (10, 26) gestülpt wird und dass die Applikationshilfe (10, 26) im Inneren des Schlauchs (12) in einen zweiten, die Arbeitsfläche (22; 40) bildenden Zustand bringbar ist, wobei der Querschnitt der Arbeitsfläche (22, 44) im Wesentlichen dem Querschnitt des aufgespannten Schlauchs (12) entspricht.

2. Verfahren nach Anspruch 1,
**dadurch gekennzeichnet,**
**dass** die Applikationshilfe (10, 26) zumindest zwei gelenkig miteinander verbundene Elemente (14, 16, 18) aufweist, wobei die Elemente (14, 16, 18) vor dem Einführen in den Schlauch (12) oder vor dem Überstülpen des Schlauchs (12) aufgerollt werden und wobei die Elemente (14, 16, 18) in dem Schlauch (12) zu der Arbeitsfläche (24;40) ausgerollt werden.

3. Verfahren nach Anspruch 1 oder 2,
**dadurch gekennzeichnet,**
**dass** die Applikationshilfe (10, 26) zumindest zwei einzelne brettförmige Elemente (28, 30) aufweist, wobei die Elemente (28, 30) vor dem Einführen in den Schlauch (12) oder vor dem Überstülpen des Schlauchs (12) in Längsrichtung übereinander oder ineinander gelegt werden, und wobei die zumindest zwei Elemente in dem Schlauch (12) aufgeklappt, aufgeschoben oder seitlich miteinander formschlüssig zur Bildung der Arbeitsfläche (40) verbunden werden.

4. Applikationshilfe (10, 26) zum Anbringen einer Applikation an, in oder auf einer Lage eines Schlauchs (12) insbesondere Folienschlauchs, wobei die Applikationshilfe (10, 26) in den Schlauch (12) einschiebbar ist oder über welches der Schlauch (12) überziehbar ist,
**dadurch gekennzeichnet,**
**dass** die Applikationshilfe (10, 26) in einen ersten, zusammengelegten Zustand mit einer Querschnittsfläche bringbar ist, die kleiner als eine Querschnittsfläche des Schlauchs 12 ist, wobei die Applikationshilfe (10, 26) in dem ersten, zusammengelegen Zustand in den Schlauch (12) einführbar bzw. der Schlauch über die Applikationshilfe (10, 26) stülpbar ist und dass die Applikationshilfe (10, 26) im Inneren des Schlauchs (12) in einen zweiten, die Arbeitsfläche (22; 40) bildenden Zustand bringbar ist, in dem die Applikationshilfe (10, 26) einen Querschnitt aufweist, der im Wesentlichem dem Querschnitt des aufgespannten Schlauchs (12) entspricht.

5. Vorrichtung nach Anspruch 4,
**dadurch gekennzeichnet,**
**dass** die Applikationshilfe (10, 26) zumindest zwei flächige Elemente (14, 16, 18; 28, 30) umfasst, die in dem Schlauch (12) zur Bildung der Arbeitsfläche (22, 40) zusammensetzbar, faltbar oder ausziehbar sind.

6. Vorrichtung nach Anspruch 4,
**dadurch gekennzeichnet,**
**dass** die zumindest zwei Elemente (14, 16, 18) entlang ihrer Längsachsen (22) gelenkig miteinander verbunden sind.

7. Vorrichtung nach zumindest einem der vorhergehenden Ansprüche,
**dadurch gekennzeichnet,**
**dass** die zumindest zwei Elemente einzelne Elemente (28, 30) sind, die entlang Längsseite jeweils Vorsprünge (40, 42) bzw. Aussparungen (36, 38) aufweisen, mittels denen die einzelnen Elemente (28, 30) formschlüssig zu der Arbeitsfläche (40) verbindbar sind.

8. Vorrichtung nach zumindest einem der vorhergehenden Ansprüche,
**dadurch gekennzeichnet,**
**dass** die zumindest zwei Elemente (14, 16, 18; 28, 30) im ausgerollten oder zusammengesetzten Zustand einen Umfang aufweisen, der im Wesentlichen einem Innenumfang des Schlauchs (12) entspricht.

9. Vorrichtung nach zumindest einem der vorhergehenden Ansprüche,
**dadurch gekennzeichnet,**
**dass** die zumindest zwei Elemente (14, 16, 18; 28, 30) brettförmig ausgebildet sind.

10. Vorrichtung nach zumindest einem der vorhergehenden Ansprüche,
**dadurch gekennzeichnet,**
**dass** die zumindest zwei flächigen Elemente (28, 30) in Querrichtung teleskopartig zueinander ausziehbar sind.
